# EUROPEAN PATENT SPECIFICATION

(11) **EP 1 889 477 B1**
(45) Date of publication and mention of the grant of the patent: **12.08.2015**
(21) Application number: 06744160.0
(22) Date of filing: 09.06.2006
(51) Int. Cl.: H04N 21/231, H04N 21/262

(54) **PROGRAM GUIDE OPTIMIZATION SYSTEM**
PROGRAMMANLEITUNGS-OPTIMIERUNGSSYSTEM
SYSTEME D'OPTIMISATION DE GUIDE DE PROGRAMME

(30) Priority: 09.06.2005 GB 0511774
(43) Date of publication of application: 20.02.2008
(73) Proprietor: NDS Limited, Staines, Middlesex TW18 4EX (GB)
(72) Inventor: WHITE, David, Wymouth Dorset DT3 4DH (GB); BASTABLE, Ian, Fareham Hampshire PO15 7LT (GB); GOLD, Martin Orchid House, Stockbridge Hampshire SO20 6BE (GB); PLATT, Anthony, Eastleigh, Hampshire SO53 4LA (GB)
(74) Representative: Watterson, Peer Marten John
(86) International application number: PCT/GB2006/002109
(87) International publication number: WO 2006/131746

(56) References cited:
- US-A1- 2002 059 185
- US-A1- 2003 141 993
- US-A1- 2003 145 327
- US-B1- 6 728 966

## Description

### RELATED APPLICATION INFORMATION

The present application claims the benefit of priority based on UK Patent Application GB 0511774.2 of NDS Limited, filed 9 June 2005, and titled, "EXTENDED SERVICE INFORMATION 2 (XSI-2)".

### FIELD OF THE INVENTION

The present invention, in preferred embodiments thereof, relates to electronic program guides (EPG), and more particularly, systems for optimizing EPG data and the transmission thereof.

### BACKGROUND OF THE INVENTION

PATRICIA is an algorithm which provides a flexible means of storing, indexing, and retrieving information in a large file, which is economical of index space and of reindexing time. It does not require rearrangement of text or index as new material is added. It requires a minimum restriction of format of text and of keys; it is extremely flexible in the variety of keys it will respond to. It retrieves information in response to keys furnished by the user with a quantity of computation which has a bound which depends linearly on the length of keys and the number of their proper occurrences and is otherwise independent of the size of the library. It has been implemented in several variations as FORTRAN programs for the CDC-3600, utilizing disk file storage of text. It has been applied to several large information-retrieval problems and will be applied to others. PATRICIA is described in PATRICIA-Practical Algorithm To Retrieve Information Coded in Alphanumeric, Donald R. Morrison, JACM Vol. 15, Issue 4 (October 1968), pages 514 - 534.

Patricia Trees are also discussed at length in The Art of Computer Programming, vol. 3, Donald E. Knuth, Addison-Wesley Publishing Company, Inc., 1973, on pages 490 - 504, and 681 - 687.

US Patent 6,763,522 to Kendo et al. describes a system and method for providing an electronic program guide for broadcasted digital television wherein the electronic program guide displays only currently broadcasting minor channels, and timely event and contextual information. The system of the present invention includes program code in a memory for causing a tuner/de-multiplexor subsystem to tune to a preselected major channel broadcast frequency and to provide thereby at least one transport stream comprising a plurality of associated digital data elementary streams. The elementary streams include minor channel audio and video, as well as program and system information tables (PSIT), all of which are associated by packet identifiers to provide a table hierarchy. The system of the present invention compares presently broadcasting minor channel and PSIT information with corresponding information in memory. If the presently broadcasting information is more contemporaneous than the stored information, the stored information is updated, or replaced, with the presently broadcasting information to enable display of only actively broadcasting minor channels and up-to-the-minute event and contextual information.

US patent application 10/084,106 of Unger, published as US 2002/0194613, describes a method and apparatus for reconstituting packetized data streams representing a television program when the program uses multiple packet identifiers (PID) as in selective encryption schemes. Transmission of multiple sets of system information (SI) is avoided by incorporating a lookup table within a private data packet. A dual buffer arrangement in the set-top box provides ease of reconstitution of a data stream by generation of an interrupt upon receipt of a packet with a shadow PID. The buffers are toggled as a result of the interrupt and a corresponding packet can be found either at the beginning of the newly active buffer or the end of the inactive buffer. The stream of packets representing a program can then be reconstituted by creation of a new packet having the primary PID and shadow packet's payload.

US Patent application 11/196,086 of Domegan et al., published as US 2005/0283799, describes a system for localizing an EPG program schedule, including an EPG service provider station including a database of channels and corresponding EPG program schedule information, a database manager identifying a plurality of channel line-ups potentially receivable at a viewing location, a transmitter, and a receiver, a multimedia viewer situated at the viewing location including an automatic channel line-up identifier identifying a first line-up of television channels receivable at the viewing location, a channel line-up processor at the viewing location calculating a channel line-up from among the plurality of channel line-ups that substantially matches the first line-up, a receiver receiving from the EPG service provider station the plurality of channel line-ups, and a transmitter transmitting to the EPG service provider station the identifier of the channel line-up calculated by the channel line-up processor, and a network connection linking the multimedia viewer to the EPG service provider, wherein the EPG service provider station transmitter transmits to the multimedia viewer the plurality of channel line-ups and also transmits to the multimedia viewer EPG program schedule information localized to the viewing location and based on the identifier of the channel line-up calculated by the channel line-up processor, and wherein the EPG service provider station receiver receives from the multimedia viewer the identifier of the calculated channel line-up, and wherein the multimedia viewer receiver also receives from the EPG service provider station the EPG program schedule information.

PCT application PCT/US02/24940 of Diego Inc., published in the English language as WO 03/015394, describes a method whereby localized content and corresponding applications can be provided to thin-client interactive television terminals. Localization may be performed on general data feeds by applying, at a portal that receives the data feeds, localization parameters specified in a plurality of channel configuration records. The local content is then provided to their corresponding head-ends. From the head-ends, the local content and its application are carousel broadcasted to thin-client terminals via different data pipes. A viewer can tune to a synthetic channel having the local content and application via familiar television metaphors, such as from a remote control or from an electronic program guide. The viewer's interaction with the local content can be limited to a walled garden.

PCT application PCT/US00/05188 of Index Systems, Inc., published in the English language as WO 00/52928, describes a system and method for providing merged electronic program guides with redundant listings removed. The television system receives EPG data of television programs broadcast by a plurality of program signal sources. Such signal sources may include OTA broadcast, cable, satellite, and the like. Either the television system or a merging system separate from the television system receives EPG data including program scheduling information of television programs telecast from the various signal sources. The system further receives channel mapping information for each of the signal sources. The channel mapping information relates television channels to television stations carried by the signal sources. The system creates a merged channel map based on the channel mapping information with any duplicate television station listings removed. Each television channel is associated with a unique channel identifier. Duplicate television station listings are therefore identified by identifying duplicate channel identifiers. Duplicate television station listings may be eliminated based on a priority associated with the various signal sources, or based on the signal quality of the various sources.

PCT application PCT/IL02/00190 of NDS Ltd., published in the English language as WO 02/075596 on 26 September 2002, and corresponding US patent application 10/469,487 of Sterkin et al., published on 29 July 2004 as US 2004/0148637, describes a method for accessing at least one literal data item in a hierarchical structure, the method including receiving a request to access at least one literal data item, and accessing the at least one literal data item, at least in part, by choosing and using an access method chosen from the following group: local storage access, back channel access, and data carousel access. The disclosure of WO 02/075596 and corresponding US 2004/0148637 are hereby incorporated herein by reference.

Published European patent application EP 0912054 of General Instruments Corp. describes an Interactive Program Guide (IPG) data for television is delivered to integrated receiver-decoders (IRDs) in a decoder population via, for example, a satellite network. The IPG data provides scheduling information for global and local programming services which are carried via the satellite network as well as another network such as a CATV network or a terrestrial broadcast network. Each IRD is assigned to an IPG region using unit addressing. At the IRD, IPG data is filtered so that only the global data and the region-specific data for the IRD's IPG region is retained and processed by the IRD. Channel map data is also delivered to the IRDs so that bundles of IRD data can be filtered out using firmware filtering to discard program sources that are not present in the channel map. The IRD data which is retained after filtering is used to provide scheduling information via an on-screen display. A preferred source may be designated when there are duplicative channels on the different networks.

Standards that are relevant to understanding the state of the art include the following published standards:
ETS 300 468, *Digital Video Broadcasting (DVB) Specification for Service Information (SI) in DVB Systems*;
ETR 162, *Digital Broadcasting Systems for Television, Sound and Data Services; Allocation of Service Information (SI) Codes for Digital Video Broadcasting (DVB) Systems;*
ETR 211, *Digital Video Broadcasting (DVB); Guidelines on Implementation and Usage of Service Information (SI)*.

ISO 639 is an international standard listing short codes for language names.

US-B-6728966 discloses an electronic television program guide information that is downloaded, stored and searched by a local device. A plurality of linked lists are used to remove redundancy, increase search speed, and allow dynamic categories. When a new category is encountered a new head node for a link list data structure is created. When a first program guide object containing information related to that category is downloaded, a link is made (i.e., a pointer is stored) from the head node to the guide object. When subsequent program guide objects containing information related to that category are downloaded, links are added to the end of the list or inserted in alphabetical order. As guide objects expire the links are removed. When no links remain in a particular category the head node for that category is deleted.

US2003/0141993 discloses that data destined for a client is compressed at a server in a manner that produces a compressed data string that can be searched in its compressed state. The server constructs a code table that assigns codes from a standard code set (e.g., ASCII code set) that are normally unused to selected character pairs in the data string (e.g., the most frequently occurring character pairs). During compression, the selected character pairs are replaced with the corresponding codes. Identifiers are inserted into the compressed data string to separate substrings. To search the compressed data string at the client, a search query is compressed and compared to the compressed substrings. The substring identifiers are used to quickly locate each successive compressed substring; when a match is found, the matching substring is decompressed by replacing the code in the compressed substring with the corresponding character pair in the code table.

The invention provides a method and system for optimising program guide information in accordance with claims 1 and 11.

ETS 300 468, *Digital Video Broadcasting (DVB) Specification for Service Information*(*SI*) *in DVB Systems* specifies a way for a broadcast headend to provide data that will appear on a program guide of a personal video recorder (PVR) or set top box (STB). The terms PVR and STB, unless specifically noted, are used herein interchangeably. The terms PVR and STB are collectively and generically referred to herein as a "receiver" or "receivers".

The data provided typically includes data about: events, such as television shows; DVB SI services, popularly called TV channels;
Near video on demand (NVOD) services; Bouquets, a set of services presented on the program guide; and
Mosaics.

In order to improve efficiency and flexibility offered to a broadcaster in the way each STB builds a list of channels and services in its channel line up (for example, with the definition of new selection criteria attribute associated to each channel), and to support other broadcaster requirements which DVB SI did not support, Extended Service Information (XSI) was developed. XSI was originally developed as a proprietary extension of DVB SI by NDS Limited. XSI utilizes DVB SI and MPEG-2 private data descriptors, private data tables, and data carousels as a mechanism to deliver XSI data to STBs.

Since XSI was deployed, digital television platforms have grown beyond what XSI was originally designed for, new technology such as PVRs have been introduced, and the cost of program guide data storage in the STB has decreased, resulting in the need for a new service information system.

The present invention seeks to provide an improved method and system for sorting data strings for more efficient delivery to electronic program guides.

There is thus provided in accordance with a preferred embodiment of the present invention a method of optimizing strings included in program guide data for transmission, the method including sharing, in the program guide data, a plurality of strings, each string among the plurality of strings including a shared sorting key, implementing an order access of a sorted sharing index, wherein the program guide data and the shared sorting key are included in the same data storage structure.

Further in accordance with a preferred embodiment of the present invention the sorted sharing index includes a Patricia tree sort index.

There is also provided in accordance with another preferred embodiment of the present invention a method of optimizing program guide data for transmission, the method including providing, at a broadcast headend, a list of services and the program guide data, the program guide data including a list of events to be broadcast on services corresponding to service identifiers included within the list of services, associating the services with channels, further associating the channels into channel groups, selecting a field included in program guide data associated with each event, sorting the list of events to be broadcast on the services according to the selected field, grouping the sorted list of events, such that all identical instances the field are grouped together, collapsing the grouped sorted list of events such that one of the following includes a main event and every other instance of the event includes a collapsed event one instance of the event next to be broadcast on at least one service associated with the channel group, and one instance of the event presently being broadcast on at least one service associated with the channel group, thereby producing optimized program guide data.

Further in accordance with a preferred embodiment of the present invention and also including transmitting the optimized program guide data.

Still further in accordance with a preferred embodiment of the present invention the transmitting includes broadcasting the optimized program guide data.

Additionally in accordance with a preferred embodiment of the present invention the selected field includes a title string associated with the event.

Moreover in accordance with a preferred embodiment of the present invention the sorting the list of events includes a Patricia tree sort according to the selected field.

There is also provided in accordance with still another preferred embodiment of the present invention a method of displaying data in a program guide, the method including receiving a list of events to be displayed in the program guide, the list including collapsed, sorted, and grouped event data, selecting, for each collapsed, sorted, and grouped event, a main event and at least one associated collapsed event, displaying the main event in a sorted list of events, and displaying the collapsed events upon selection of the main event from the sorted list of events.

Further in accordance with a preferred embodiment of the present invention the sorted list includes an A - Z sorted list.

There is also provided in accordance with still another preferred embodiment of the present invention a method of optimizing program guide data associated with a plurality of broadcast events for display on an electronic program guide (EPG), the method including associating a data field with a broadcast event selected from among the plurality of broadcast events, the data field including at least the following fields a language data field, a title data field, a channelgroup data field, a broadcast time data field, a channel data field, and a service data field, ordering the program guide data associated with the broadcast event according to the data field associated with the broadcast event in the following order Language, Title, ChannelGroup, Channel, and Service, thereby producing ordered program guide data associated with the broadcast event, assigning the broadcast event a LastInChannelFlag (LICF) flag and a LastInChannelGroupFlag (LICGF) flag, and determining at least one main event from among the plurality of broadcast events, wherein the at least one main event includes an event within the ordered list of program guide data associated with the broadcast event including an identical Title field within a ChannelGroup within a first Channel included in the ChannelGroup.

Further in accordance with a preferred embodiment of the present invention a collapsed event includes all events within the ordered program guide data associated with the broadcast event which includes the channelgroup, and wherein each channelgroup is terminated by the LICF set to 1, until the LICGF is set to 1.

Still further in accordance with a preferred embodiment of the present invention the Language data field includes an ISO 639 language identifier.

Additionally in accordance with a preferred embodiment of the present invention the Title data field includes a broadcast event title.

Moreover in accordance with a preferred embodiment of the present invention the ChannelGroup data field includes a channel group identifier, the channel group identifier identifying the channelgroup to which a service broadcasting the event is assigned.

Further in accordance with a preferred embodiment of the present invention the Time data field includes a broadcast time for the broadcast event, the broadcast time including the time at which the broadcast event is scheduled to be broadcast, on the service broadcasting the broadcast event.

Still further in accordance with a preferred embodiment of the present invention the Channel data field includes a channel identifier within the channelgroup including the service broadcasting the event.

Additionally in accordance with a preferred embodiment of the present invention the Service data field includes a DVB service identifier.

Moreover in accordance with a preferred embodiment of the present invention the LastInChannelFlag flag is set to 1 if the ChannelGroup data field, Time data field, or Channel data field differs from a corresponding ChannelGroup data field, Time data field, or Channel data field in a preceding event within the ordered program guide data list, thereby denoting an end of a channel selection group, and is set to 0 if one of the ChannelGroup data field, Time data field, and Channel data field do not differ from a corresponding ChannelGroup data field, Time data field, or Channel data field in the next event within the ordered program guide data list.

Further in accordance with a preferred embodiment of the present invention the LICGF is set to 1 for any event including a last event for a given Title data field within the channelgroup, and set to 0 for any event not including a last event for a given Title data field within the channelgroup.

There is also provided in accordance with still another preferred embodiment of the present invention a system of optimizing strings included in program guide data for transmission, the system including a string sharer operative to share, in the program guide data, a plurality of strings, the plurality of strings including a shared sorting key, a sorter operative to implement an order access of a sorted sharing index, wherein the program guide data and the shared sorting key are included in the same data storage structure.

There is also provided in accordance with still another preferred embodiment of the present invention a system for optimizing program guide data for transmission, the system including at a broadcast headend, a list of services and program guide data, the program guide data including a list of events to be broadcast on the services, a channel association unit which associates services with channels, a channel group association unit which further associates the channels into channel groups, a field selector which selects a field included in data associated with each event, a list sorter which sorts the list of events according to the selected field, a grouping unit which groups the sorted list of events such that all instances of an event which include an identical instance of the field are grouped together, a collapsing unit which collapses the grouped sorted list of events such that one of the following instances of the event includes a main event and every other instance of the event within the list includes a collapsed event one instance of the event next to be broadcast on at least one service associated with the channelgroup, and one instance of the event presently being broadcast on at least one service associated with the channelgroup, thereby producing optimized program guide data.

There is also provided in accordance with still another preferred embodiment of the present invention a system of displaying data in a program guide, the system including an event list receiver which receives a list of events to be displayed in the program guide, the list including collapsed, sorted, and grouped event data, a selector which selects, for each collapsed, sorted, and grouped event, a main event and at least one associated collapsed event, a displaying unit which displays the main event in a sorted list of events, and displays the at least one collapsed event upon selection of the main event from the sorted list of events.

There is also provided in accordance with still another preferred embodiment of the present invention a system for optimizing program guide data associated with events for display on an electronic program guide (EPG), the system including a data field associator which associates data fields with a broadcast event from among a plurality of broadcast events, the data field including at least t e following fields a language data field, a title data field, a channelgroup data field, a broadcast time data field, a channel data field, and a service data field, a program guide data orderer which orders program guide data associated with the broadcast event according to the data associated with the broadcast event in the following order Language, Title, ChannelGroup, Channel, and Service, thereby producing ordered program guide data associated with the broadcast event, a broadcast event assignor which assigns the broadcast event a LastInChannelFlag (LICF) flag and a LastInChannelGroupFlag (LICGF) flag, and a determiner which determines at least a main event from among the plurality of broadcast events, wherein the main event includes an event within the ordered program guide data associated with the broadcast event, the program guide data associated with the broadcast event including an identical Title field within a ChannelGroup within a first Channel included in the ChannelGroup.

### BRIEF DESCRIPTION OF THE DRAWINGS

The present invention will be understood and appreciated more fully from the following detailed description, taken in conjunction with the drawings in which:
Fig. 1 is a simplified pictorial illustration of an Electronic Program Guide (EPG) displaying information about television programs during a period of time, the information optimized according to a preferred method of the present invention, and constructed and operative in accordance with a preferred embodiment of the present invention;
Fig. 2 is a simplified pictorial illustration of a PATRICIA tree sort of selected television programs depicted in the EPG of Fig. 1, as well as additional television programs;
Fig. 3 is a bit-wise listing of the title strings of some of the television programs in the PATRICIA tree of Fig. 2;
Fig. 4 is a simplified UML diagram showing the relationship between ChannelGroup, Channel, and Service, as implemented in presenting data in the EPG of Fig. 1;
Fig. 5 is a simplified block diagram showing the relationship between ChannelGroup, Channel, and Service, useful in illustrating the UML diagram of Fig. 4; and
Figs. 6 - 9 are simplified flowchart illustrations of preferred methods of operation of the system of Fig. 1, in accordance with preferred embodiments thereof.

### DETAILED DESCRIPTION OF A PREFERRED EMBODIMENT

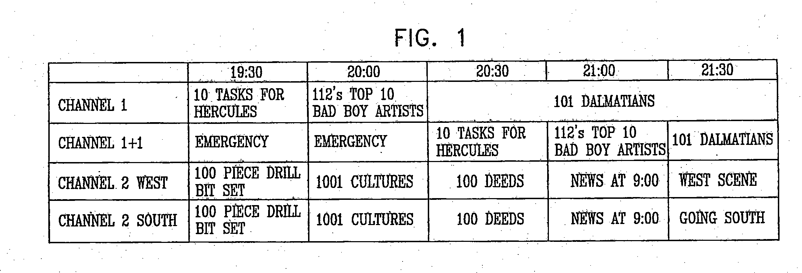

Reference is now made to Fig. 1, which is a simplified pictorial illustration of an Electronic Program Guide (EPG) displaying information about television programs during a period of time, the information optimized according to a preferred method of the present invention, and constructed and operative in accordance with a preferred embodiment of the present invention. The EPG depicted in Fig. 1, as is well known in the art, comprises a grid with channels arranged descending along the vertical axis, and time progressing along the horizontal axis. Programs to be broadcast at a given time on a given channel are shown at the grid location comprising the intersection of the given time with the given channel. The EPG depicted in Fig. 1 comprises program guide information for four channels, Channel 1, Channel 1 + 1, Channel 2 West, and Channel 2 South.

For purposes of the discussion of Fig. 1, Channel 1 + 1 comprises a so called "time shifted" channel, wherein programming broadcasted on Channel 1 is broadcast with a time-delay on an auxiliary channel. Channel 2 West and Channel 2 South comprise "regional channels". Programming on regional channels comprises shared programs and region specific programs. Shared programs are broadcast on both Channel 2 West and Channel 2 South, such as "100 Piece Drill Bit Set" (at 19:30) and "1001 Cultures" (at 20:00). Region specific programs are programs broadcast with target audiences of particular regions, such as "West Scene", broadcast only on Channel 2 West, and "Going South", broadcast only on Channel 2 South. Both of the region specific programs are scheduled to be broadcast at the same time, 21:30.

Typically, EPGs enable viewing program listings in a number of ways besides the grid depicted in Fig. 1. For example and without limiting the generality of the foregoing, some EPGs allow sorting program listings by genre (such as Movies, Sports, etc.) and sub-genre (such as Drama, Comedy, etc. for Movies, and Football, Golf, etc. for Sports). Some EPGs allow viewing program listings sorted in an A - Z list of program listings, typically for up to the next seven days programming.

A set top box (STB) or personal video recorder (PVR), hereinafter, referred to as a "receiver", which preferably receives and caches data for display in the EPG of Fig. 1 would have to cache the data for "10 Tasks for Hercules" twice; once for Channel 1 at 19:30 and once for Channel 1 + 1 at 20:30. Likewise, data for "1001 Cultures" would have to be cached twice by the receiver; once for Channel 2 West at 20:00, and once for Channel 2 South at 20:00. Additionally, fast response times by the EPG are desired in order to ensure that a viewer's user experience is enhanced.

In certain broadcast environments, such as, for example, a broadcast environment implementing XSI-2 (an extended SI system commercially available from NDS Ltd.) a full seven days of data is already cached in the receiver. Furthermore, in the XSI-2 broadcast environment, title string sharing is implemented, such that two programs appearing as distinct programs in the EPG preferably "share" their title string, as described below, in data available to the receiver. For example and without limiting the generality of the foregoing, in the EPG depicted in Fig. 1, the title string "10 Tasks for Hercules" is a shared title string, shared by the program item appearing on the EPG on Channel 1 at 19:30 and the program item appearing on the EPG on Channel 1 + 1 at 20:30. Likewise, the title string of the program item, "100 Piece Drill Bit Set", appearing on the EPG at 19:30 on both Channel 2 West and Channel 2 South, is a shared title string. Similarly, the title string of the program item "Emergency", appearing on Channel 1 + 1 at 19:30 and 20:00 is also a shared title string.

In a preferred embodiment of the present invention, title strings and other strings are separated into separate data repositories. The title string sharing key is defined as an uncompressed sort string. For example and without limiting the generality of the foregoing, for the program item "EMERGENCY", the title string sharing key is "EMERGENCY". If need be, the entire title is used to distinguish between two title strings, for instance, if the following two title strings exist in EPG data: "Emergency - Episode 8" and "Emergency - Episode 9", the entire title is needed to distinguish between the two title strings.

In a preferred embodiment of the present invention, a pointer is provided in the EPG data from a shared title string, the pointer pointing to a list of programs sharing the title string. For example, if the two episodes of Emergency on Channel 1 + 1 at 19:30 and at 20:00 are two different episodes, only one title string, "Emergency" preferably appears in the EPG data. The one title string preferably comprises a pointer, such that when a viewer selects one of the two episodes of "Emergency", the EPG preferably retrieves the list of programs sharing the title string "Emergency", and, based on the time of the episode selected by the viewer, the EPG is able to select, from the list which is pointed to, information about the episode selected by the viewer.

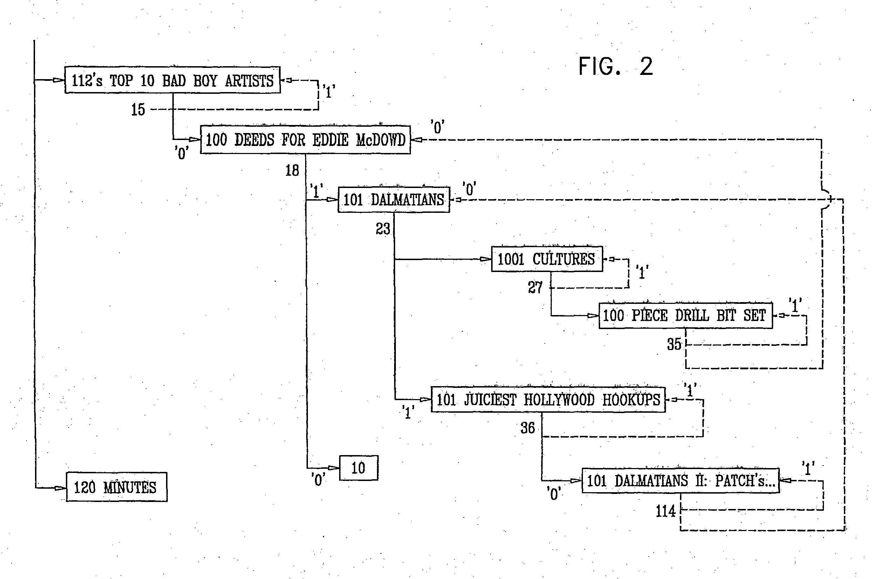

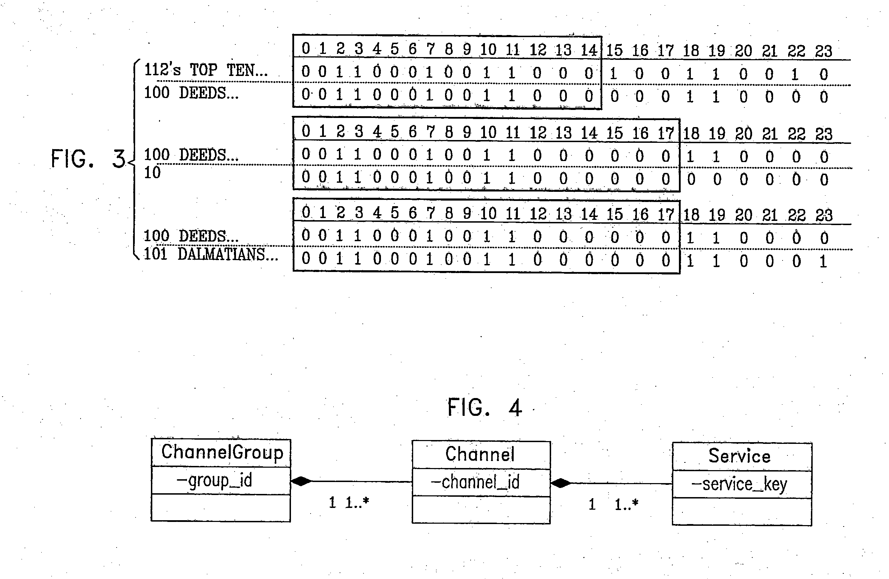

Reference is now made to Fig. 2, which is a simplified pictorial illustration of a PATRICIA tree sort of selected television programs depicted in the EPG of Fig. 1, as well as additional television programs. As is explained below, in detail, with reference to Fig. 3, the PATRICIA tree comprises a binary tree. For ease of depiction, strings in the PATRICIA tree of Fig. 2 are represented in alpha-numeric characters and not in binary. For a PATRICIA tree comprising some number Q strings, the PATRICIA tree also comprises Q nodes. As is well known in the art, the time required for inserting, deleting, and searching the PATRICIA tree requires is proportional to log(Q). (See D. Knuth, The Art of Computer Programming, vol. 3, pp. 490 - 504, and 681 - 687.)

Any two children of a given node start with the same sequence of N bits. For instance, in the PATRICIA tree of Fig. 2, each string begins with the character "1", thus, each string begins with the bit string "00110001". The actual location of each node in the PATRICIA tree of Fig. 2 depends on the method of insertion of the strings into the PATRICIA tree, as is well known in the art. (See The Art of Computer Programming, vol. 3, pp. 490 - 504, and 681 - 687, particularly Exercise 15 (p. 501), and the solution thereto (p. 63).)

Dotted lines in the PATRICIA tree are terminal pointers which point back to an actual node which can be considered a leaf (terminal node). Pointing to leaves alleviates the need to store a given string twice, once in a node and once in a leaf.

Pointers, both terminal and non-terminal, are depicted in Fig. 2 with a bit-value indicator (either depicted as a '0' or a '1'). The bit-value indicator is understood as a "navigational" aide in comparing nodes. If a node differs from the next node by a '0', follow the bit-value indicator for '0'. Similarly, if the node differs from the next node by a '1', follow the bit-value indicator for '1'.

Reference is now additionally made to Fig. 3, which is a bit-wise listing of the title strings of some of the television programs in the PATRICIA tree of Fig. 2. As was explained above with reference to Fig. 2, the PATRICIA tree comprises a binary tree. Any two children of a given node start with the same sequence of N bits, and thus, the two children of the given node differ at bit N. Thus, each node of the PATRICIA tree represents a single bit comparison of the string comprised in the node. By way of example, the top of Fig. 3 depicts a comparison between the first three characters of the string "112's TOP TEN BAD BOY ARTISTS" ("112") expressed in binary and the first three characters of the string "100 DEEDS FOR EDDIE McDOWD" ("100") expressed in binary. Bit 15 is the first bit to differ between the two strings. Thus, in Fig. 2, the number 15 appears beside the solid arrow descending from "112's TOP TEN BAD BOY ARTISTS" to "100 DEEDS FOR EDDIE McDOWD".

Likewise, the middle portion of Fig. 3 depicts a comparison between the first three characters of the string "100 DEEDS FOR EDDIE McDOWD" ("100") expressed in binary the first three characters of the string "10" ("10<EOS>", where <EOS> indicates "end of string", and is represented by the binary string 00000000) expressed in binary. Bit 18 is the first bit to differ between the two strings. Thus, in Fig. 2, the number 18 appears beside the solid arrow descending from "100 DEEDS FOR EDDIE McDOWD" to "10".

Similarly, the bottom of Fig. 3 depicts a comparison between the first three characters of the string "100 DEEDS FOR EDDIE McDOWD" ("100") expressed in binary the first three characters of the string "101 DALMATIANS" ("101") expressed in binary. Since the bit-value indicator for the '0' pointer from "100 DEEDS FOR EDDIE McDOWD" points to "10", with an indication that bit 18 is the first bit to differ, the bit-value indicator for the '0' pointer from "100 DEEDS FOR EDDIE McDOWD" points to "101 DALMATIANS". However, as is seen in Fig. 3, 100 DEEDS FOR EDDIE McDOWD" and "101 DALMATIANS" do not differ at bit 18, but rather at bit 23.

Reference is now made to Fig. 4, which is a simplified UML diagram showing the relationship between ChannelGroup, Channel, and Service, as implemented in presenting data in the EPG of Fig. 1. EPG data is typically broadcast from a broadcast headend to the receiver. The EPG data preferably comprises lists of programs broadcast at a given time, and instructions to the receiver as to which channel (more formally, according to the DVB standard, to which service) to tune to in order to view a given program at a given time. For instance, if the viewer selects "100 PIECE DRILL BIT SET" at 19:30, broadcast on Channel 2 West, the receiver needs to locate the broadcast data corresponding to the selected program (based on Program Specific Information in the broadcast EPG data) at the selected time on the selected channel (based on Service Information (SI) in the broadcast EPG data). In a preferred embodiment of the present invention, services (which, according to the DVB SI standard correspond to conventional television channels) are grouped into channels, and channels are grouped into groups of channels.

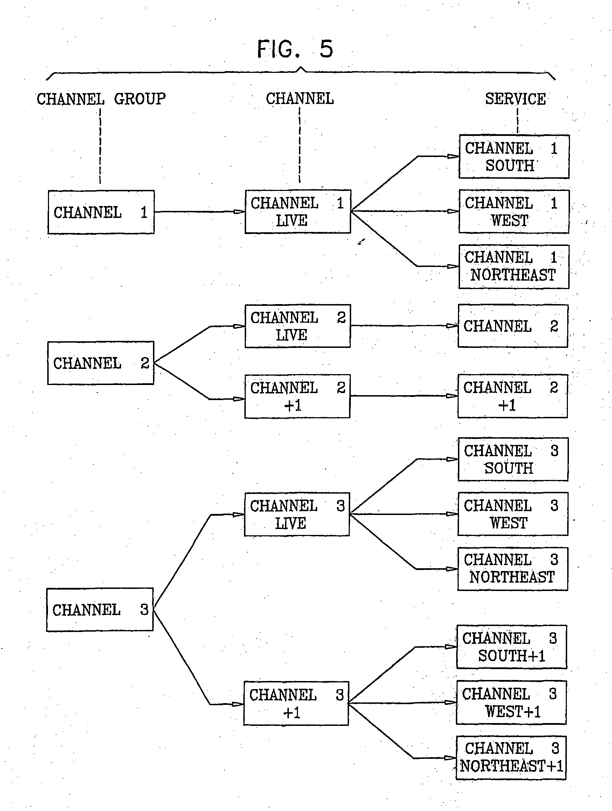

Reference is now additionally made to Fig. 5, which is a simplified block diagram showing the relationship between ChannelGroup, Channel, and Service, useful in illustrating the UML diagram of Fig. 4. Services, such as "Channel 1 South", "Channel 1 West", and "Channel 1 Northeast" are grouped together as channels, "Channel 1 Live". "Channel 1 Live" in turn is a member of a "Channel 1" channel group. Similarly, for a channel and a time shifted channel, the "Channel 2" channel group comprises two channels, "Channel 2 Live" and "Channel 2 + 1". Each of "Channel 2 Live" and "Channel 2 + 1" comprise a corresponding broadcast service.

A more complex example comprising both time shifted channels and regional channels is presented for a "Channel 3" channel group. The "Channel 3" channel group comprises a "Channel 3 Live" channel and a "Channel 3 + 1" time shifted channel group". Each of the "Channel 3 Live" channel and a "Channel 3 + 1" time shifted channel group each comprise three regional services.

It is appreciated that the examples given in Fig. 5 are purely hypothetical channel groups, channels, and services.

As mentioned above, it is preferable to enable A - Z listing of programs in the EPG, as mentioned above. Preferably, EPG A - Z listing supports:
a minimum of 7.5 days of scheduling;
multi-letter search;
event collapsing (described below);
genre and subgenre filtering; and
fast response times.

EPGs operative in accordance with preferred embodiments of the present invention preferably display two types of events:
main events, comprising events which appear in main alphabetical listing screens of the EPG; and
collapsed events, comprising events which share a title (for example, the 20:30 instance of "10 TASKS FOR HERCULES" shown in Fig. 1), which only appear in a "collapsed" EPG screen. The collapsed EPG screen is preferably entered by selecting a main event.

Main events preferably show an event which is the showing of the event which starts next, or is present on the air for a given channel group.

Services associated with the same Channel preferably share a unique logical channel number (the logical channel number of the Channel) used in a DVB SI bouquet. Those skilled in the art will appreciate that, preferably, the unique logical channel number is used across multiple bouquets. Thus, as explained above, a channel preferably identifies a combination of regional services comprising both live and time-shifted services.

Services grouped within a channel preferably identify a "collapsing down" of the schedule of the services, such that when a title is shared on multiple services for the same broadcast time (as, for example, "1001 CULTURES" in Fig. 1), only one instance of the title will be displayed in the EPG main A - Z sort screen. The receiver preferably chooses one of the many instances of the shared title to display in the EPG main A - Z sort screen.

It is appreciated that grouping services into channels enables collapsing the schedule down within a given time period. Grouping channels into ChannelGroups enables "collapsing along" a schedule, enabling future broadcasts of the same title to be collapsed, for instance programming on time shifted services.

A service need not be assigned to a channel or channel group. In such a case an arbitrary ChannelGroup number may preferably be assigned to the service based on a Service identifier. For example and without limiting the generality of the foregoing, a service may be assigned an arbitrarily high ChannelGroup number.

One preferred method of ordering an A - Z sort of events within a broadcast stream comprises ordering event data according to the following fields in the following order:
*Language, Title, ChannelGroup, Time, Channel, Service*
where:
   Language is according to the ISO 639 language identifier for a language;
   Title comprises a full event title;
   ChannelGroup comprises the channel group to which a service is assigned (as described above);
   Time comprises a broadcast time for the event on the assigned service;
   Channel comprises the channel within a channel group comprising the assigned service (as described above); and
   Service is a unique identifier for each service to assist with ordering events with the same title and time within a Channel
Once event data is ordered as described above, main and collapsed events are preferably determined from within the Channel and the ChannelGroup groupings, where the determination is preferably signaled by a LastInChannelFlag (LICF) and LastInChannelGroupFlag (LICGF). The signaling preferably comprises the order:
   *Language, Title, ChannelGroup, Time, Channel, Service, LastInChannalFlag, LastInChannelGroupFlag*

After the event data is ordered in an ordered list, each event is examined to determine a value of the LastInChannelFlag.

The LastInChannelFlag is set to 1 if the ChannelGroup, Time, or Channel differs between the event presently being evaluated and the ChannelGroup, Time, or Channel in the next event within the ordered event data list. If the ChannelGroup, Time, or Channel does not differ from the corresponding ChannelGroup, Time, or Channel in the next event within the ordered event data list, LastInChannelFlag is set to 0.

When the LastInChannelFlag is set to 1, the LastInChannelFlag signals an end of a "channel selection group". The channel selection group comprises consecutive A - Z ordered entries wherein LastInChannelFlag is set to 0, up to, and including the next entry with LastInChannelFlag set to 1.

The LastInChannelGroupFlag is set to 1 for any event comprising the last event for a given Title string within a ChannelGroup. Otherwise, LastInChannelGroupFlag is set to 0.

For example and without limiting the generality of the foregoing, using the following ChannelGroups, Channels, and Service identifiers (and ignoring the Language field), and the schedule depicted in Fig. 1:

| **ChannelGroup Name** | **Channel Group** |
|---|---|
| Channel 1 | 1 |
| Channel 2 | 2 |

and,

| **Channel Name** | **Channel** |
|---|---|
| Channel 1 Live | 1 |
| Channel 1 + 1 | 2 |
| Channel 2 Live | 1 |

and,

| **Service Name** | **Service** |
|---|---|
| Channel 1 | 1 |
| Channel 1 + 1 | 2 |
| Channel 2 West | 3 |
| Channel 2 South | 4 |

and thus, the ordered event list comprises:

| **Title** | **ChannelGroup** | **Time** | **Channel** | **Service** | **LICF** | **LICGF** |
|---|---|---|---|---|---|---|
| 10 Tasks for Hercules | 1 | 19:30 | 1 | 1 | 1 | 0 |
| | | 20:30 | 2 | 2 | 1 | 1 |
| 100 Deeds | 2 | 20:30 | 1 | 3 | 0 | 0 |
| | | 20:30 | 1 | 4 | 1 | 1 |
| 100 Piece Drill Bit Set | 2 | 19:30 | 1 | 3 | 0 | 0 |
| | | 19:30 | 1 | 4 | 1 | 1 |
| 1001 Cultures | 2 | 20:00 | 1 | 3 | 0 | 0 |
| | | 20:00 | 1 | 4 | 1 | 1 |
| 101 Dalmatians | 1 | 20:30 | 1 | 1 | 1 | 0 |
| | | 21:30 | 2 | 2 | 1 | 1 |
| 122's Top 10 Bad Boy Artists | 1 | 20:00 | 1 | 1 | 1 | 0 |
| | | 21:00 | 2 | 2 | 1 | 1 |
| Emergency | 1 | 19:30 | 2 | 2 | 1 | 0 |
| | | 20:00 | 2 | 2 | 1 | 1 |
| Going South | 2 | 21:30 | 1 | 4 | 1 | 1 |
| News at 9:00 | 2 | 21:00 | 1 | 3 | 0 | 0 |
| | | 21:00 | 1 | 4 | 1 | 1 |
| West Scene | 2 | 21:30 | 1 | 3 | 1 | 1 |

Main events comprise those events comprised within the ordered event list comprising the same Title within a ChannelGroup within a first Channel comprised in the ChannelGroup.

Collapsed events comprise events within subsequent channel grouping, wherein each channel grouping is terminated by LICF set to 1, until the LICGF is set to 1. For instance, in the table above, "101 Dalmatians" comprises one main event and one collapsed event.

The EPG selects the event for display from each channel grouping as being the event comprising the lowest logical channel number used in the DVB SI bouquet.

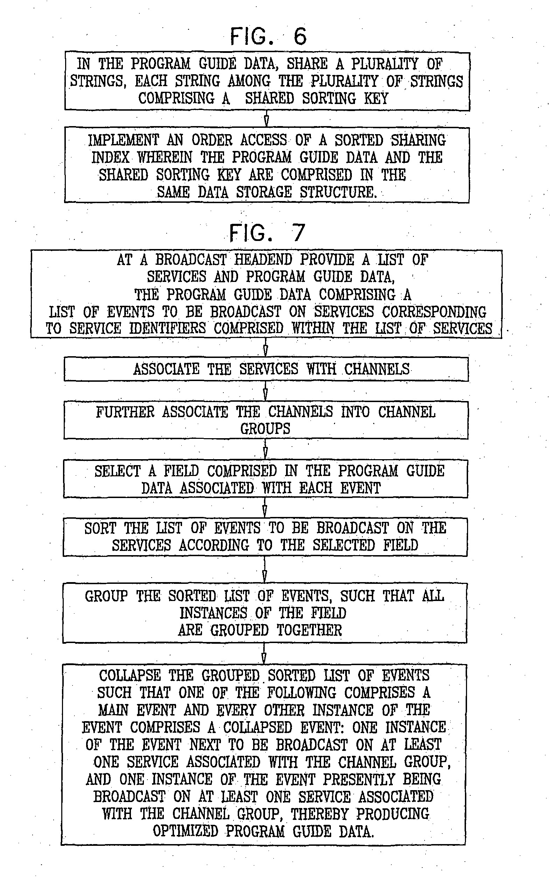

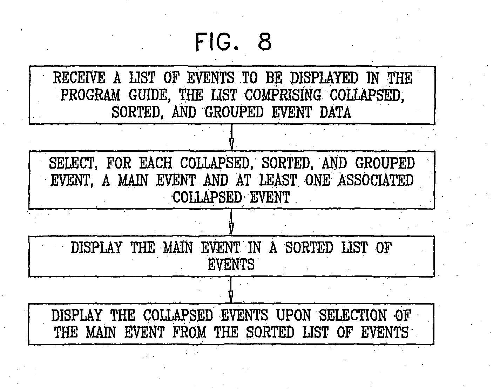

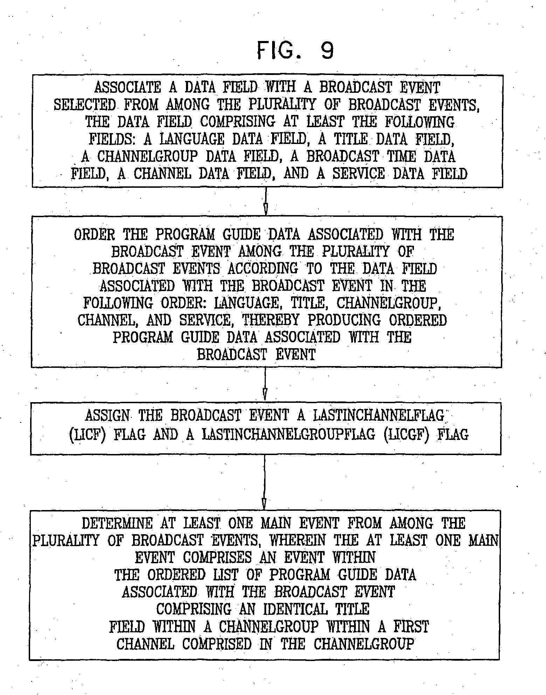

Reference is now made to Figs. 6 - 9, which are simplified flowchart illustrations of preferred methods of operation of the system of Fig. 1, in accordance with preferred embodiments thereof. Figs. 6 - 9 are believed to be self explanatory with reference to the above discussion.

It is appreciated that software components of the present invention may, if desired, be implemented in ROM (read only memory) form. The software components may, generally, be implemented in hardware, if desired, using conventional techniques.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined only by the claims which follow:

## Claims

1. A method of optimizing program guide data associated with a plurality of broadcast events for display on an electronic program guide (EPG), the method comprising:
associating a data field with a broadcast event selected from among the plurality of broadcast events, the data field comprising at least the following fields:
a language data field;
a title data field;
a channelgroup data field;
a broadcast time data field;
a channel data field; and
a service data field;
ordering the program guide data associated with the broadcast event according to the data field associated with the broadcast event in the following order:
Language; Title; ChannelGroup; Channel; and Service,
thereby producing ordered program guide data associated with the broadcast event;
assigning the broadcast event a LastInChannelFlag (LICF) flag and a LastInChannelGroupFlag (LICGF) flag; and
determining at least one main event from among the plurality of broadcast events,
wherein the at least one main event comprises an event within the ordered list of program guide data associated with the broadcast event comprising an identical Title field within a ChannelGroup within a first Channel comprised in the ChannelGroup.

2. The method according to claim 1 and wherein a collapsed event comprises all events within the ordered program guide data associated with the broadcast event which comprises the channelgroup, and wherein each channelgroup is terminated by the LICF set to 1, until the LICGF is set to 1.

3. The method according to either of claim 1 and claim 2 and wherein the Language data field comprises an ISO 639 language identifier.

4. The method according to any of claims 1 - 3 and wherein the Title data field comprises a broadcast event title.

5. The method according to any of claims 1 - 4 and wherein the ChannelGroup data field comprises a channel group identifier, the channel group identifier identifying the channelgroup to which a service broadcasting the event is assigned.

6. The method according to any of claims 1 - 5 and wherein the Time data field comprises a broadcast time for the broadcast event, the broadcast time comprising the time at which the broadcast event is scheduled to be broadcast, on the service broadcasting the broadcast event.

7. The method according to any of claims 1 - 6 and wherein the Channel data field comprises a channel identifier within the channelgroup comprising the service broadcasting the event.

8. The method according to any of claims 1 - 7 and wherein the Service data field comprises a DVB service identifier.

9. The method according to any of claims 1 - 8 and wherein the LastInChannelFlag flag:
is set to 1 if the ChannelGroup data field, Time data field, or Channel data field differs from a corresponding ChannelGroup data field, Time data field, or Channel data field in a preceding event within the ordered program guide data list, thereby denoting an end of a channel selection group; and
is set to 0 if one of the ChannelGroup data field, Time data field, and Channel data field do not differ from a corresponding ChannelGroup data field, Time data field, or Channel data field in the next event within the ordered program guide data list.

10. The method according to any of claims 1 - 9 and wherein the LICGF is:
set to 1 for any event comprising a last event for a given Title data field within the channelgroup; and
set to 0 for any event not comprising a last event for a given Title data field within the channelgroup.

11. A system for optimizing program guide data associated with events for display on an electronic program guide (EPG), the system comprising:
a data field associator which associates data fields with a broadcast event from among a plurality of broadcast events, the data field comprising at least the following fields:
a language data field;
a title data field;
a channelgroup data field;
a broadcast time data field;
a channel data field; and
a service data field;
a program guide data orderer which orders program guide data associated with the broadcast event according to the data associated with the broadcast event in the following order:
Language; Title; ChannelGroup; Channel; and Service;
thereby producing ordered program guide data associated with the broadcast event;
a broadcast event assignor which assigns the broadcast event a LastInChannelFlag (LICF) flag and a LastInChannelGroupFlag (LICGF) flag; and
a determiner which determines at least a main event from among the plurality of broadcast events,
wherein the main event comprises an event within the ordered program guide data associated with the broadcast event, the program guide data associated with the broadcast event comprising an identical Title field within a ChannelGroup within a first Channel comprised in the ChannelGroup.

12. The system according to claim 11 and wherein a collapsed event comprises all events within the ordered program guide data associated with the broadcast event which comprises the channelgroup, and wherein each channel group is terminated by the LICF set to 1, until the LICGF is set to 1.

13. The system according to either of claim 11 and claim 12 and wherein the Language data field comprises an ISO 639 language identifier.

14. The system according to any of claims 11 - 13 and wherein the Title data field comprises a broadcast event title.

15. The system according to any of claims 11 - 14 and wherein the ChannelGroup data field comprises a channel group identifier, the channel group identifier identifying the channelgroup to which a service broadcasting the event is assigned.

16. The system according to any of claims 11 - 15 and wherein the Time data field comprises a broadcast time for the broadcast event, the broadcast time comprising the time at which the broadcast event is scheduled to be broadcast, on the service broadcasting the broadcast event.

17. The system according to any of claims 11 - 16 and wherein the Channel data field comprises a channel identifier within the channelgroup comprising the service broadcasting the event.

18. The system according to any of claims 11 - 17 and wherein the Service data field comprises a DVB service identifier.

19. The system according to any of claims 11 - 18 and wherein the LastInChannelFlag flag:
is set to 1 if the ChannelGroup data field, Time data field, or Channel data field differs from a corresponding ChannelGroup data field, Time data field, or Channel data field in a preceding event within the ordered program guide data list, thereby denoting an end of a channel selection group; and
is set to 0 if one of the ChannelGroup data field, Time data field, and Channel data field do not differ from a corresponding ChannelGroup data field, Time data field, or Channel data field in the next event within the ordered program guide data list.

20. The system according to any of claims 11 - 19 and wherein the LICGF is:
set to 1 for any event comprising a last event for a given Title data field within the channelgroup; and
set to 0 for any event not comprising a last event for a given Title data field within the channelgroup.

## Patentansprüche

1. Verfahren zum Optimieren von Programmführerdaten, die mit einer Vielzahl von Rundfunkveranstaltungen zur Anzeige auf einem elektronischen Programmführer (EPG) assoziiert sind, wobei das Verfahren umfasst:
Assoziieren eines Datenfelds mit einer Rundfunkveranstaltung, die aus der Vielzahl von Rundfunkveranstaltungen ausgewählt wird, wobei das Datenfeld mindestens die folgenden Felder umfasst:
ein Sprachdatenfeld;
ein Titeldatenfeld;
ein Kanalgruppen-Datenfeld;
ein Sendezeit-Datenfeld;
ein Kanaldatenfeld; und
ein Dienstdatenfeld;
Ordnen der mit der Rundfunkveranstaltung assoziierten Programmführerdaten gemäß dem mit der Rundfunkveranstaltung assoziierten Datenfeld in der folgenden Anordnung:
Sprache; Titel; KanalGruppe; Kanal; und Dienst,
wodurch geordnete Programmführerdaten erzeugt werden, die mit der Rundfunkveranstaltung assoziiert sind;
Zuweisen des LICF(LastInChannelFlag)-Flags und eines LICGF(LastInChannelGroupFlag)-Flags an die Rundfunkveranstaltung; und
Bestimmen von mindestens einer Hauptveranstaltung aus der Vielzahl von Rundfunkveranstaltungen,
worin die mindestens eine Hauptveranstaltung eine Veranstaltung innerhalb der geordneten Liste von mit der Rundfunkveranstaltung assoziierten Programmführerdaten umfasst, die ein identisches Titelfeld innerhalb einer KanalGruppe innerhalb eines ersten Kanals umfassen, der in der KanalGruppe enthalten ist.

2. Verfahren nach Anspruch 1 und worin eine reduzierte Veranstaltung alle Veranstaltungen innerhalb der mit der Rundfunkveranstaltung assoziierten geordneten Programmführerdaten umfasst, die die Kanalgruppe umfassen und worin jede Kanalgruppe abgeschlossen wird, indem das LICF auf 1 eingestellt wird bis das LICGF auf 1 eingestellt wird.

3. Verfahren nach einem der Ansprüche 1 und 2 und worin das Sprachdatenfeld eine Sprachkennung nach ISO 639 umfasst.

4. Verfahren nach einem der Ansprüche 1-3 und worin das Titeldatenfeld einen Rundfunkveranstaltungstitel umfasst.

5. Verfahren nach einem der Ansprüche 1-4 und worin das KanalGruppe-Datenfeld eine Kanalgruppenkennung umfasst, wobei die Kanalgruppenkennung die Kanalgruppe identifiziert, an die ein Dienst zugewiesen ist, der die Veranstaltung sendet.

6. Verfahren nach einem der Ansprüche 1-5 und worin das Zeitdatenfeld eine Sendezeit für die Rundfunkveranstaltung umfasst, wobei die Sendezeit die Zeit umfasst, zu der das Senden der Rundfunkveranstaltung auf dem Dienst geplant ist, der die Rundfunkveranstaltung sendet.

7. Verfahren nach einem der Ansprüche 1-6 und worin das Kanaldatenfeld eine Kanalkennung innerhalb der Kanalgruppe umfasst, die den Service umfasst, der die Veranstaltung sendet.

8. Verfahren nach einem der Ansprüche 1-7 und worin das Dienstdatenfeld eine DVB(digitales Fernsehen)-Dienstkennung umfasst.

9. Verfahren nach einem der Ansprüche 1-8 und worin das LastInChannelFlag-Flag:
auf 1 eingestellt wird, falls das KanalGruppe-Datenfeld, Zeitdatenfeld oder Kanaldatenfeld von einem entsprechenden KanalGruppe-Datenfeld, Zeitdatenfeld oder Kanaldatenfeld in einer vorhergehenden Veranstaltung innerhalb der geordneten Programmführer-Datenliste verschieden ist, wodurch ein Ende einer Kanalauswahlgruppe bezeichnet wird; und
auf 0 eingestellt wird, falls eines des KanalGruppe-Datenfelds, Zeitdatenfelds und Kanaldatenfelds von einem entsprechenden KanalGruppe-Datenfeld, Zeitdatenfeld oder Kanaldatenfeld in der nächsten Veranstaltung innerhalb der geordneten Programmführer-Datenliste nicht verschieden ist.

10. Verfahren nach einem der Ansprüche 1-9 und worin das LICGF:
auf 1 für irgendeine Veranstaltung eingestellt wird, die eine letzte Veranstaltung für ein gegebenes Titeldatenfeld innerhalb der Kanalgruppe umfasst; und
auf 0 für irgendeine Veranstaltung eingestellt wird, die keine letzte Veranstaltung für ein gegebenes Titeldatenfeld innerhalb der Kanalgruppe umfasst.

11. System zum Optimieren von Programmführerdaten, die mit Veranstaltungen zur Anzeige auf einem elektronische Programmführer (EPG) assoziiert sind, wobei das System umfasst:
einen Datenfeldassoziator, der Datenfelder mit einer Rundfunkveranstaltung aus einer Vielzahl von Rundfunkveranstaltungen assoziiert, wobei das Datenfeld mindestens die folgenden Felder umfasst:
ein Sprachdatenfeld;
ein Titeldatenfeld;
ein Kanalgruppen-Datenfeld;
ein Sendezeit-Datenfeld;
ein Kanaldatenfeld; und
ein Dienstdatenfeld;
einen Programmführer-Datenordner, der mit der Rundfunkveranstaltung assoziierte Programmführerdaten gemäß den mit der Rundfunkveranstaltung assoziierten Daten in der folgenden Anordnung ordnet:
Sprache; Titel; KanalGruppe; Kanal; und Dienst,
wodurch geordnete Programmführerdaten erzeugt werden, die mit der Rundfunkveranstaltung assoziiert sind;
einen Rundfunkveranstaltungszuweiser, der der Rundfunkveranstaltung ein LICF(LastInChannelFlag)-Flag und ein LICGF(LastInChannelGroupFlag)-Flag zuweist;
und
einen Bestimmer, der mindestens eine Hauptveranstaltung aus der Vielzahl von Rundfunkveranstaltungen bestimmt,
worin die Hauptveranstaltung eine Veranstaltung innerhalb der mit der Rundfunkveranstaltung assoziierten geordneten Programmführerdaten umfasst, wobei die mit der Rundfunkveranstaltung assoziierten Programmführerdaten ein identisches Titelfeld innerhalb einer KanalGruppe innerhalb eines ersten Kanals umfassen, der in der KanalGruppe enthalten ist.

12. System nach Anspruch 11 und worin eine reduzierte Veranstaltung alle Veranstaltungen innerhalb der mit der Rundfunkveranstaltung assoziierten geordneten Programmführerdaten umfasst, die die Kanalgruppe umfassen und worin jede Kanalgruppe abgeschlossen wird, indem das LICF auf 1 eingestellt wird bis das LICGF auf 1 eingestellt wird.

13. System nach einem der Ansprüche 11 und 12 und worin das Sprachdatenfeld eine Sprachkennung nach ISO 639 umfasst.

14. System nach einem der Ansprüche 11-13 und worin das Titeldatenfeld einen Rundfunkveranstaltungstitel umfasst.

15. System nach einem der Ansprüche 11-14 und worin das KanalGruppe-Datenfeld eine Kanalgruppenkennung umfasst, wobei die Kanalgruppenkennung die Kanalgruppe identifiziert, an die ein Dienst zugewiesen ist, der die Veranstaltung sendet.

16. System nach einem der Ansprüche 11-15 und worin das Zeitdatenfeld eine Sendezeit für die Rundfunkveranstaltung umfasst, wobei die Sendezeit die Zeit umfasst, zu der das Senden der Rundfunkveranstaltung auf dem Dienst geplant ist, der die Rundfunkveranstaltung sendet.

17. System nach einem der Ansprüche 11-16 und worin das Kanaldatenfeld eine Kanalkennung innerhalb der Kanalgruppe umfasst, die den Service umfasst, der die Veranstaltung sendet.

18. System nach einem der Ansprüche 11-17 und worin das Dienstdatenfeld eine DVB(digitales Fernsehen)-Dienstkennung umfasst.

19. System nach einem der Ansprüche 11-18 und worin das LastInChannelFlag-Flag:
auf 1 eingestellt wird, falls das KanalGruppe-Datenfeld, Zeitdatenfeld oder Kanaldatenfeld von einem entsprechenden KanalGruppe-Datenfeld, Zeitdatenfeld oder Kanaldatenfeld in einer vorhergehenden Veranstaltung innerhalb der geordneten Programmführer-Datenliste verschieden ist, wodurch ein Ende einer Kanalauswahlgruppe bezeichnet wird; und
auf 0 eingestellt wird, falls eines des KanalGruppe-Datenfelds, Zeitdatenfelds und Kanaldatenfelds von einem entsprechenden KanalGruppe-Datenfeld, Zeitdatenfeld oder Kanaldatenfeld in der nächsten Veranstaltung innerhalb der geordneten Programmführer-Datenliste nicht verschieden ist.

20. System nach einem der Ansprüche 11-19 und worin das LICGF:
auf 1 für irgendeine Veranstaltung eingestellt wird, die eine letzte Veranstaltung für ein gegebenes Titeldatenfeld innerhalb der Kanalgruppe umfasst; und
auf 0 für irgendeine Veranstaltung eingestellt wird, die keine letzte Veranstaltung für ein gegebenes Titeldatenfeld innerhalb der Kanalgruppe umfasst.

## Revendications

1. Procédé d'optimisation de données de guide de programme associées à une pluralité d'événements de diffusion à afficher sur un guide de programme électronique (EPG), le procédé comprenant les étapes ci-dessous consistant à :
associer un champ de données avec un événement de diffusion sélectionné parmi la pluralité d'événements de diffusion, le champ de données comprenant au moins les champs suivants :
un champ de données de langue ;
un champ de données de titre ;
un champ de données de groupe de canaux ;
un champ de données de temps de diffusion ;
un champ de données de canal ; et
un champ de données de service ;
ordonner les données de guide de programme associées à l'événement de diffusion selon le champ de données associé à l'événement de diffusion dans l'ordre suivant :
langue ; titre ; groupe de canaux ; canal ; et service,
ce qui permet de produire par conséquent des données de guide de programme ordonnées associées à l'événement de diffusion ;
affecter à l'événement de diffusion un fanion « LastInChannelFlag » (LICF) et un fanion « LastInChannelGroupFlag » (LICGF) ; et
déterminer au moins un événement principal parmi la pluralité d'événements de diffusion ;
dans lequel ledit au moins un événement principal comprend un événement au sein de la liste ordonnée de données de guide de programme associées à l'événement de diffusion comprenant un champ de titre identique dans un groupe de canaux au sein d'un premier canal inclus dans le groupe de canaux.

2. Procédé selon la revendication 1, dans lequel un événement groupé comprend tous les événements dans les données de guide de programme ordonnées associées à l'événement de diffusion qui comprend le groupe de canaux, et dans lequel chaque groupe de canaux se termine par le fanion LICF défini sur 1, jusqu'à ce que le fanion LICGF soit défini sur 1.

3. Procédé selon l'une quelconque des revendications 1 et 2, dans lequel le champ de données de langue comprend un identifiant de langue ISO 639.

4. Procédé selon l'une quelconque des revendications 1 à 3, dans lequel le champ de données de titre comprend un titre d'événement de diffusion.

5. Procédé selon l'une quelconque des revendications 1 à 4, dans lequel le champ de données de groupe de canaux comprend un identifiant de groupe de canaux, l'identifiant de groupe de canaux identifiant le groupe de canaux auquel un service diffusant l'événement est affecté.

6. Procédé selon l'une quelconque des revendications 1 à 5, dans lequel le champ de données de temps comprend un temps de diffusion pour l'événement de diffusion, le temps de diffusion comprenant l'heure à laquelle la diffusion de l'événement de diffusion est planifiée, sur le service diffusant l'événement de diffusion.

7. Procédé selon l'une quelconque des revendications 1 à 6, dans lequel le champ de données de canal comprend un identifiant de canal dans le groupe de canaux comprenant le service diffusant l'événement.

8. Procédé selon l'une quelconque des revendications 1 à 7, dans lequel le champ de données de service comprend un identifiant de service DVB.

9. Procédé selon l'une quelconque des revendications 1 à 8, dans lequel le fanion « LastInChannelFlag » :
est défini sur 1 si le champ de données de groupe de canaux, le champ de données de temps ou le champ de données de canal diffère d'un champ de données de groupe de canaux correspondant, d'un champ de données de temps correspondant ou d'un champ de données de canal correspondant dans un événement précédent au sein de la liste de données de guide de programme ordonnées, ce qui indique par conséquent une fin d'un groupe de sélection de canaux ; et
est défini sur 0 si l'un parmi le champ de données de groupe de canaux, le champ de données de temps et le champ de données de canal ne diffère pas d'un champ de données de groupe de canaux correspondant, d'un champ de données de temps correspondant ou d'un champ de données de canal correspondant dans l'événement successif au sein de la liste de données de guide de programme ordonnées.

10. Procédé selon l'une quelconque des revendications 1 à 9, dans lequel le fanion LICGF est :
défini sur 1 pour tout événement comportant un dernier événement pour un champ de données de titre donné au sein du groupe de canaux ; et
défini sur 0 pour tout événement ne comportant pas de dernier événement pour un champ de données de titre donné dans le groupe de canaux.

11. Système pour optimiser des données de guide de programme associées à des événements à afficher sur un guide de programme électronique (EPG), le système comprenant :
un module d'association de champs de données qui associe des champs de données à un événement de diffusion parmi une pluralité d'événements de diffusion, le champ de données comprenant au moins les champs suivants :
un champ de données de langue ;
un champ de données de titre ;
un champ de données de groupe de canaux ;
un champ de données de temps de diffusion ;
un champ de données de canal ; et
un champ de données de service ;
un module d'ordonnancement de données de guide de programme qui ordonne des données de guide de programme associées à l'événement de diffusion selon les données associées à l'événement de diffusion dans l'ordre suivant :
langue ; titre ; groupe de canaux ; canal ; et service ;
ce qui permet de produire par conséquent des données de guide de programme ordonnées associées à l'événement de diffusion ;
un module d'affectation d'événements de diffusion qui affecte à l'événement de diffusion un fanion « LastInChannelFlag » (LICF) et un fanion « LastInChannelGroupFlag » (LICGF) ; et
un module de détermination qui détermine au moins un événement principal parmi la pluralité d'événements de diffusion ;
dans lequel l'événement principal comprend un événement au sein des données de guide de programme ordonnées associées à l'événement de diffusion, les données de guide de programme associées à l'événement de diffusion comprenant un champ de titre identique dans un groupe de canaux au sein d'un premier canal inclus dans le groupe de canaux.

12. Système selon la revendication 11, dans lequel un événement groupé comprend tous les événements dans les données de guide de programme ordonnées associées à l'événement de diffusion qui comprend le groupe de canaux, et dans lequel chaque groupe de canaux se termine par le fanion LICF défini sur 1, jusqu'à ce que le fanion LICGF soit défini sur 1.

13. Système selon l'une quelconque des revendications 11 et 12, dans lequel, le champ de données de langue comprend un identifiant de langue ISO 639.

14. Système selon l'une quelconque des revendications 11 à 13, dans lequel le champ de données de titre comprend un titre d'événement de diffusion.

15. Système selon l'une quelconque des revendications 11 à 14, dans lequel le champ de données de groupe de canaux comprend un identifiant de groupe de canaux, l'identifiant de groupe de canaux identifiant le groupe de canaux auquel est affecté un service diffusant l'événement.

16. Système selon l'une quelconque des revendications 11 à 15, dans lequel le champ de données de temps comprend un temps de diffusion pour l'événement de diffusion, le temps de diffusion comprenant l'heure à laquelle la diffusion de l'événement de diffusion est planifiée, sur le service diffusant l'événement de diffusion.

17. Système selon l'une quelconque des revendications 11 à 16, dans lequel le champ de données de canal comprend un identifiant de canal dans le groupe de canaux comprenant le service diffusant l'événement.

18. Système selon l'une quelconque des revendications 11 à 17, dans lequel le champ de données de service comprend un identifiant de service DVB.

19. Système selon l'une quelconque des revendications 11 à 18, dans lequel le fanion « LastInChannelFlag » :
est défini sur 1 si le champ de données de groupe de canaux, le champ de données de temps ou le champ de données de canal diffère d'un champ de données de groupe de canaux correspondant, d'un champ de données de temps correspondant ou d'un champ de données de canal correspondant dans un événement précédent au sein de la liste de données de guide de programme ordonnées, ce qui indique par conséquent une fin d'un groupe de sélection de canaux ; et
est défini sur 0 si l'un parmi le champ de données de groupe de canaux, le champ de données de temps et le champ de données de canal ne diffère pas d'un champ de données de groupe de canaux correspondant, d'un champ de données de temps correspondant ou d'un champ de données de canal correspondant dans l'événement successif au sein de la liste de données de guide de programme ordonnées.

20. Système selon l'une quelconque des revendications 11 à 19, dans lequel le fanion LICGF est :
défini sur 1 pour tout événement comportant un dernier événement pour un champ de données de titre donné au sein du groupe de canaux ; et
défini sur 0 pour tout événement ne comportant pas de dernier événement pour un champ de données de titre donné dans le groupe de canaux.
